(19) Europäisches Patentamt / European Patent Office / Office européen des brevets

(11) **EP 3 695 508 B1**

(12) **EUROPÄISCHE PATENTSCHRIFT**

(45) Veröffentlichungstag und Bekanntmachung des Hinweises auf die Patenterteilung:
**13.07.2022  Patentblatt 2022/28**

(21) Anmeldenummer: **18753159.5**

(22) Anmeldetag: **09.08.2018**

(51) Internationale Patentklassifikation (IPC):
*H02P 21/22* (2016.01)    *H02P 25/22* (2006.01)

(52) Gemeinsame Patentklassifikation (CPC):
**H02P 6/15; H02P 6/10; H02P 21/22; H02P 25/22;**
H02P 2101/45

(86) Internationale Anmeldenummer:
**PCT/EP2018/071589**

(87) Internationale Veröffentlichungsnummer:
**WO 2019/072440 (18.04.2019 Gazette 2019/16)**

(54) **VERFAHREN ZUM BETREIBEN EINER ELEKTRISCHEN MASCHINE**

METHOD FOR OPERATING AN ELECTRIC MACHINE

PROCÉDÉ POUR FAIRE FONCTIONNER UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2017  DE 102017217912**

(43) Veröffentlichungstag der Anmeldung:
**19.08.2020  Patentblatt 2020/34**

(73) Patentinhaber:
• **Robert Bosch GmbH**
  **70442 Stuttgart (DE)**
• **SEG Automotive Germany GmbH**
  **70499 Stuttgart (DE)**

(72) Erfinder: **SZEPANSKI, Daniel**
**07743 Jena (DE)**

(74) Vertreter: **DehnsGermany Partnerschaft von Patentanwälten**
**Theresienstraße 6-8**
**80333 München (DE)**

(56) Entgegenhaltungen:
**DE-A1-102005 045 401    DE-A1-102006 021 489**
**DE-A1-102015 216 279**

**Beschreibung**

Die vorliegende Erfindung betrifft ein Verfahren zum Betreiben einer elektrischen Maschine mit einer Block-Ansteuerung sowie eine Recheneinheit und ein Computerprogramm zu dessen Durchführung.

Stand der Technik

Elektrische Maschinen, insbesondere Generatoren, können zur Umwandlung mechanischer Energie in elektrische Energie im Kraftfahrzeug verwendet werden. Üblicherweise werden dazu Klauenpolgeneratoren verwendet, welche meistens mit elektrischer Erregung ausgestattet sind. Da Klauenpolgeneratoren Drehstrom, meist dreiphasig, erzeugen, ist für die üblichen Kraftfahrzeug-Gleichspannungs-Bordnetze eine Gleichrichtung erforderlich. Dazu können Gleichrichter auf Basis von Halbleiterdioden oder Halbleiterschaltern verwendet werden.

Generatoren können auch zum Starten einer Brennkraftmaschine verwendet werden. Solche Generatoren werden auch als Startergenerator bezeichnet. Üblicherweise wird ein derartiger Startergenerator nur bei sehr kleinen Drehzahlen motorisch betrieben, da das erzeugbare Drehmoment über der Drehzahl schnell abnimmt. Denkbar sind jedoch auch größere elektrische Maschinen, die dann auch in einem Hybrid-Fahrzeug zum Antrieb des Fahrzeugs, zumindest aber zur Unterstützung der Brennkraftmaschine, verwendet werden können.

Für die Ansteuerung solcher Startergeneratoren können zum einen ein sog. PWM-Betrieb, bei dem ein Phasenstrom geregelt wird, oder eine sog. Block-Ansteuerung, bei der ein Vorkommutierungswinkel geregelt wird, verwendet werden. Ein Wechsel zwischen beiden Ansteuerarten kann in Abhängigkeit von einer Drehzahlgrenze vorgenommen werden.

Die DE 10 2005 045 401 A1 zeigt ein Verfahren zur Stromversorgung eines über eine Halbleiter-Leistungsendstufe elektronisch kommutierbaren Gleichstrommotors, welcher von einer Steuereinheit blockweise entsprechend den Signalen eines Rotorlagegebers bestromt wird. Die Bestromung des Motors ist stufenweise variabel gestaltet, derart, dass die Stromblöcke drehzahlabhängig und/oder lastabhängig in ihrer Höhe und/oder in ihrer Länge und/oder in ihrem Zündwinkel gegenüber dem Verlauf der induzierten Spannung veränderbar sind.

Offenbarung der Erfindung

Erfindungsgemäß werden ein Verfahren zum Betreiben einer elektrischen Maschine sowie eine Recheneinheit, ein Computerprogramm zu dessen Durchführung und ein maschinenlesbares Speichermedium mit dem darauf gespeicherten Computerprogramm mit den Merkmalen der unabhängigen Patentansprüche vorgeschlagen Vorteilhafte Ausgestaltungen sind Gegenstand der Unteransprüche sowie der nachfolgenden Beschreibung.

Ein erfindungsgemäßes Verfahren dient zum Betreiben einer elektrischen Maschine, beispielsweise einer Klauenpolmaschine, mit einer Block-Ansteuerung, bei dem im Rahmen einer Regelung eines Drehmoments der elektrischen Maschine ein Vorkommutierungswinkel derart eingestellt wird, dass dieser einen Kipp-Winkel für einen motorischen Betrieb und/oder einen generatorischen Betrieb nicht überschreitet.

Bei der Block-Ansteuerung bzw. einem Block-Betrieb wird ein sog. Vorkommutierungswinkel geregelt. Der Vorkommutierungswinkel gibt dabei an, wann in Bezug auf den Nulldurchgang der induzierten Polradspannung in einer Phase, die mit einer Phase verbundenen Halbleiterschalter leitend geschaltet sind. Anstatt - wie mit der sog. PWM-Ansteuerung, welche bei niedrigen Drehzahlen bzw. unterhalb einer Spannungsgrenze, d.h. wenn die Polradspannung geringer als die Zwischenkreisspannung ist - auf Ströme zu regeln, kann hier der Vorkommutierungswinkel geregelt werden (beispielsweise mit einem PI-Regler), um ein gewünschtes Soll-Drehmoment einzustellen bzw. einzuregeln.

Der resultierende Vorkommutierungswinkel kann dann direkt in ein Blockmuster umgewandelt werden, indem immer die Zwischenkreisspannung eingeprägt wird. In d-q-Koordinaten kann der Vorkommutierungswinkel als Winkel zwischen dem q-Wert und dem d-Wert der Phasenspannung aufgefasst und über die arctan2-Funktion aus diesen beiden Werten berechnet werden.

Bei der Block-Ansteuerung bewegt sich der Raumzeiger des Betrags des Phasenstroms, also in d-q-Koordinaten, auf einer Kreis- oder Ellipsenbahn (dem sog. Spannungskreis bzw. der sog. Spannungsellipse), die durch den (fest eingestellten) Betrag der Phasenspannung vorgegeben wird, deren Mittelpunkt unter anderem durch den Erregerstrom vorgegeben wird, jedoch nicht mit dem Ursprung des Raumzeigers des Phasenstroms zusammenfällt. Da das Drehmoment der elektrischen Maschine maßgeblich durch den q-Wert des Phasenstroms beeinflusst wird, kann das Drehmoment zwar durch Entlanglaufen dieser Kreis- bzw. Ellipsenbahn bei Erhöhung des Betrags des Phasenstroms auch das Drehmoment erhöht werden. Allerdings gibt es einen Punkt auf dieser Bahn, bei dessen Überschreiten trotz weiterer Erhöhung des Phasenstroms das Drehmoment wieder abnimmt, da der q-Wert des Phasenstroms wieder geringer wird. Dieser Punkt wird, je nach Definition, auch als Kipp-Punkt, Kipp-Winkel oder KippMoment bezeichnet. Einen solchen Kipp-Winkel gibt es sowohl für den motorischen Betrieb als auch den generatorischen Betrieb.

Bei dem vorgeschlagenen Verfahren wird nun der Kipp-Winkel für den motorischen Betrieb und/oder den generatorischen Betrieb während des Betriebs iterativ ermittelt, insbesondere in Echtzeit bzw. online. Der Kipp-Winkel kann dabei insbesondere unter Verwendung einer aktuell maximal stellbaren Spannung, einer aktuellen Kreisfrequenz der elektrischen Maschine, von Parametern der elektrischen Maschine und eines maximal zulässigen Phasenstromes ermittelt werden. Als Parameter werden dabei wenigstens ein verketteter Fluss und/oder wenigstens eine Induktivität der elektrischen Maschine verwendet. Als verkettete Flüsse kommen sowohl ein Rotorfluss als auch ein Streufluss in Betracht, als Induktivitäten die q-Induktivität und die d-Induktivität, die bei Rotoren, die wie Klauenpolmaschinen kein Vollpol sind, voneinander verschieden sind. Ebenso kann eine aktuelle Temperatur der elektrischen Maschine berücksichtigt werden, die insbesondere einen Einfluss auf den Widerstand des Stators bzw. dessen Wicklungen hat.

Die Parameter der elektrischen Maschine wiederum können vorzugsweise basierend auf einem q-Wert eines Phasenstroms und/oder einem d-Wert eines Phasenstroms und/oder eines Erregerstroms ermittelt werden, welche zweckmäßigerweise wiederum basierend auf gemessenen Phasenströmen der elektrischen Maschine ermittelt werden können.

Für eine detailliertere Erläuterung der Berechnung des Kipp-Winkels mit den Zwischenschritten, auch anhand von Formeln, sei an dieser Stelle auf die Figurenbeschreibung verwiesen.

Durch die Ermittlung des Kippwinkels und damit der Grenzen des Vorkommutierungswinkels immer während des Betriebs kann für den Vorkommutierungswinkel immer das Maximum ausgeschöpft werden, sodass ein effizienterer Betrieb der elektrischen Maschine, sowohl im motorischen als auch im generatorischen Betrieb ermöglicht wird.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand eines Ausführungsbeispiels in der Zeichnung schematisch dargestellt und wird im Folgenden unter Bezugnahme auf die Zeichnung beschrieben.

Kurze Beschreibung der Zeichnungen

Figur 1     zeigt schematisch eine elektrische Maschine, bei der ein erfindungsgemäßes Verfahren durchführbar ist.

Figur 2     zeigt schematisch eine Möglichkeit zur Ansteuerung einer elektrischen Maschine.

Figur 3     zeigt schematisch Stromverläufe bei einer elektrischen Maschine.

Figur 4     zeigt eine Phasenspannung einer Phase für einen Übergang zwischen einer PWM-Ansteuerung und einer Block-Ansteuerung.

Figuren     5a und 5b zeigen schematisch aktuelle Betriebspunkte einer elektrischen Maschine in einem d-q-Koordinatensystem.

Figuren     6 und 7 zeigen Verläufe verschiedener Größen einer elektrischen Maschine bei Überschreiten des Kipp-Winkels.

Figur 8     zeigt schematisch aktuelle Betriebspunkte einer elektrischen Maschine in einem d-q-Koordinatensystem.

Figur 9     zeigt schematisch einen Ablauf eines erfindungsgemäßen Verfahrens in einer bevorzugten Ausführungsform.

Figur 10    zeigt schematisch einen Vergleich eines Drehmoments einer elektrischen Maschine mit und ohne Verwendung eines erfindungsgemäßen Verfahrens.

Ausführungsform(en) der Erfindung

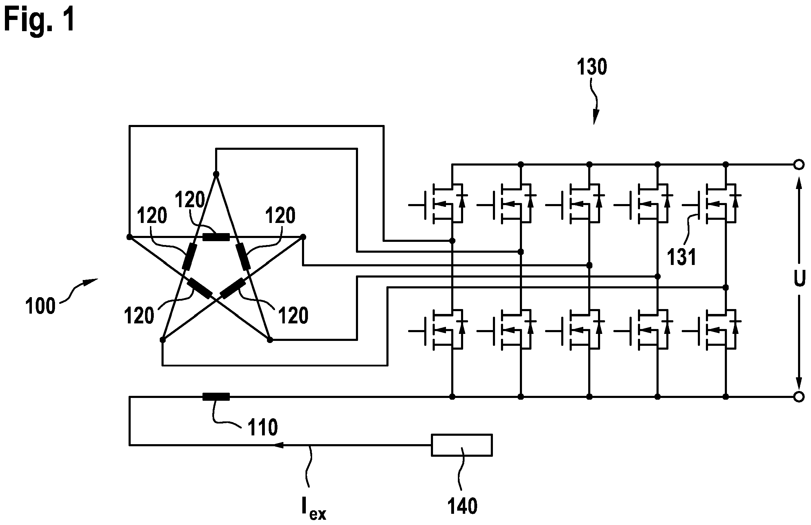

In Figur 1 ist schematisch und als Schaltbild eine elektrische Maschine, bei der ein erfindungsgemäßes Verfahren durchführbar ist, dargestellt. Die elektrische Maschine 100 ist hier beispielhaft als eine fremderregte, fünfphasige elektrische Maschine ausgebildet. Es versteht sich, dass auch eine andere Anzahl an Phasen, beispielsweise drei, verwendet werden kann. Die elektrische Maschine 100 kann zudem beispielsweise als Klauenpolmaschine ausgebildet sein.

Die elektrische Maschine 100 weist hierbei fünf Statorwicklungen 120 und eine Erreger- bzw. Läuferwicklung 110 auf. Über eine als Ansteuereinheit 140 ausgebildete Recheneinheit kann ein Erregerstrom $I_{ex}$ in der Erregerwicklung 110 eingestellt werden. Weiterhin ist eine Schaltungsanordnung 130 mit Schaltern 131, hier beispielhaft MOSFETS, von denen nur einer mit einem Bezugszeichen versehen ist, vorgesehen, mittels welcher eine Spannung U an die Statorwicklungen 120 angelegt oder abgegriffen werden kann, je nachdem ob die elektrische Maschine im motorischen oder generatorischen Betrieb verwendet wird.

Die Schalteranordnung 130 und die Steuereinheit 140 können auch jeweils Teil einer gemeinsamen Steuereinheit oder eines Inverters bzw. Stromrichters für die elektrische Maschine sein.

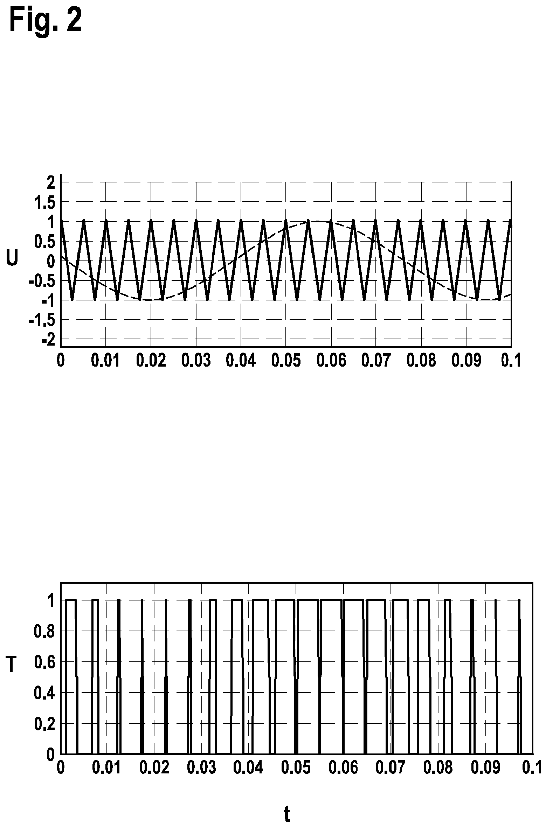

In Figur 2 ist schematisch eine Möglichkeit zur Ansteuerung einer elektrischen Maschine, wie sie beispielsweise in Figur 1 gezeigt ist, dargestellt. Im oberen Diagramm ist eine Spannung U über der Zeit t dargestellt, im unteren Diagramm ein Tastgrad T über der Zeit t.

Hierbei handelt es sich um Ansteuermuster nach einem Standardverfahren der sog. Dreieck-Sinus-Modulation. Die gewünschte Sollspannung, nämlich der Sinus-Verlauf im oberen Diagramm, wird hier überlagert von einem Dreiecksignal (auch im oberen Diagramm gezeigt), das eine deutlich höhere Frequenz aufweist als das der elektrischen Grundwelle (in der Regel mehr als 10 kHz). Jeder Schnittpunkt kennzeichnet ein Umschalten des PWM-Signals.

Das Ansteuermuster im unteren Diagramm kann nun mit einem PWM-Steuerwerk erzeugt werden. Für eine Klauenpolmaschine wird diese PWM-Ansteuerung in der Regel bis zur erwähnten Spannungsgrenze verwendet. Ab bzw. oberhalb der Spannungsgrenze wird die elektrische Maschine dann mit einem Blockmuster im Blockbetrieb bzw. mit der sog. Block-Ansteuerung angesteuert.

Diese Block-Ansteuerung zeichnet sich dadurch aus, dass die Phasenspannungen die maximal mögliche Amplitude aufweisen und diese Amplitude nicht veränderbar ist (theoretisch ist dies möglich durch Ansteuerung mit Blockbreiten von weniger 180°, dies wird jedoch in aller Regel nicht verwendet).

Als Stellgröße für ein gewünschtes Soll-Drehmoment der elektrischen Maschine dient nun neben dem Erregerstrom die Phasenlage des Spannungsvektors, der sogenannte Vorkommutierungswinkel.

Da sich die Amplitude im Blockbetrieb nicht verändern lässt (oder zumindest nicht verändert wird), wird diese Ansteuerart nur oberhalb der Spannungsgrenze verwendet (d.h. wenn die Polradspannung größer als die anliegende Zwischenkreisspannung ist), im vorliegenden Fall typischerweise bei Drehzahlen größer als 3.000/min.

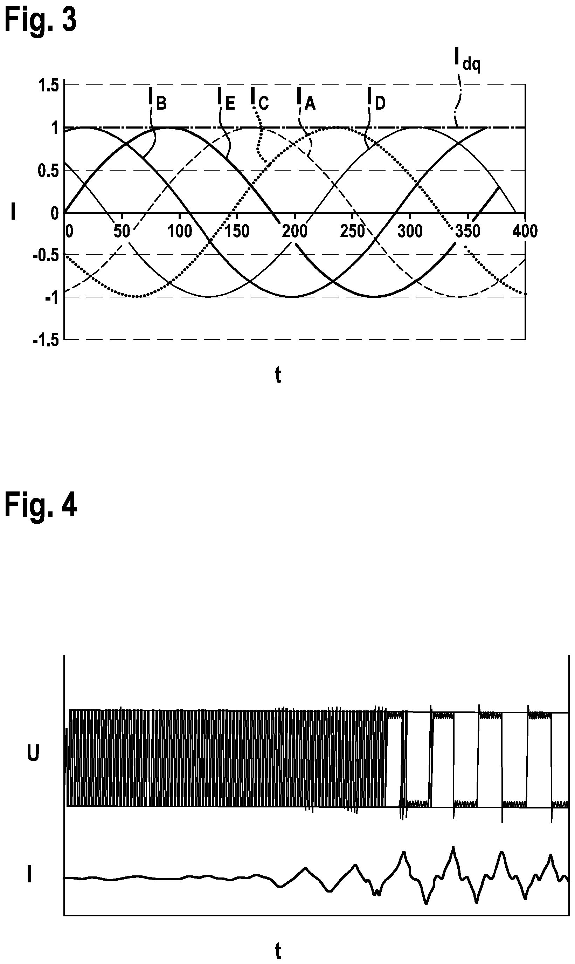

In Figur 3 sind Stromverläufe, hier die Phasenströme, gezeigt, die bei drehender elektrischer Maschine und sinusförmiger Phasenspannungsvorgabe erzeugt werden. Hierzu ist ein Strom I über der Zeit t aufgetragen.

Bei symmetrischer Verteilung können die einzelnen Phasenströme $I_A$, $I_B$, $I_C$, $I_D$ und $I_E$ zu einem Raumzeiger zusammengefasst werden. Hierzu werden die bekannten Clarke- und Park-Transformationen verwendet. Zunächst ergeben sich die Ströme $I_\alpha$ und $I_\beta$ mit der Clarke-Transformation gemäß den Formeln:

$$I_\alpha = \left( I_A + I_B \cos\left(\frac{2\pi}{5}\right) + I_C \cos\left(\frac{4\pi}{5}\right) + I_D \cos\left(\frac{6\pi}{5}\right) + I_E \cos\left(\frac{8\pi}{5}\right) \right)$$

und

$$I_\beta = \left( I_B \sin\left(\frac{2\pi}{5}\right) + I_C \sin\left(\frac{4\pi}{5}\right) + I_D \sin\left(\frac{6\pi}{5}\right) + I_E \sin\left(\frac{8\pi}{5}\right) \right).$$

Daraus ergeben sich die Ströme $I_d$ und $I_q$ mit der Park-Transformation dann gemäß den Formeln:

$$I_d = I_\alpha \cos\theta + I_\beta \sin\theta \ \text{ und } \ I_q = -I_\alpha \sin\theta + I_\beta \cos\theta \, ,$$

wobei mit $\theta$ hier der Winkel des Läufers bzw. Rotors der elektrischen Maschine bezeichnet ist. Auf die gleiche Weise kann auch die Spannung in d-q-Koordination transformiert werden, d.h. es können der q-Wert der Phasenspannung $U_q$ und der d-Wert der Phasenspannung $U_d$ erhalten werden. Der Vorkommutierungswinkel lässt sich dann als $\alpha = \arctan2(U_q, U_d)$ erhalten.

In Figur 4 ist die Phasenspannung einer Phase für den Übergang zwischen einer PWM-Ansteuerung und einer Block-Ansteuerung bzw. dem Blockbetrieb dargestellt. Hierzu sind Spannung U und Strom I über der Zeit t aufgetragen.

Dabei ist am Verlauf des Stroms zu sehen, dass hier keine Regelung mehr auf den Phasenstrom stattfindet.

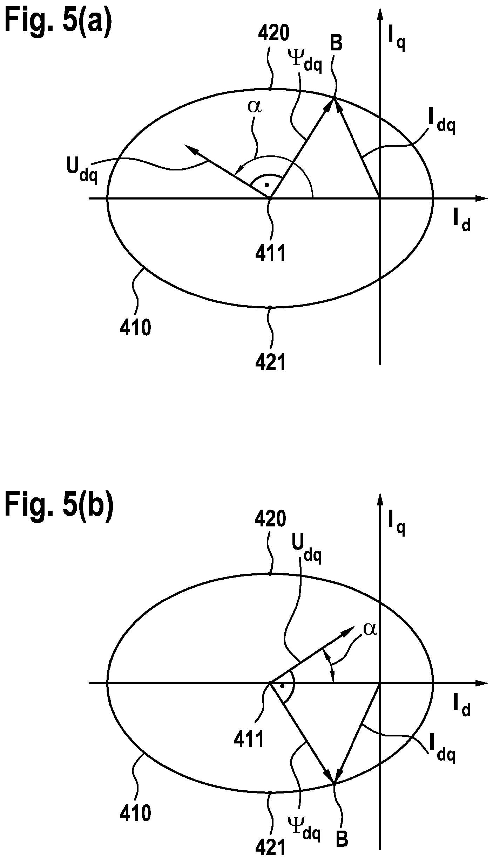

In den Figuren 5a und 5b sind nun für einen motorischen Betrieb (Figur 5a) und einen generatorischen Betrieb (Figur 5b) schematisch aktuelle Betriebspunkte einer elektrischen Maschine in einem d-q-Koordinatensystem dargestellt, und zwar mittels der sog. Stromortskurve. Hierzu sind die Ströme $I_d$ und $I_q$ aufgetragen.

In der Stromortskurve ist der aktuelle Betriebspunkt B der elektrischen Maschine dargestellt. Dieser Betriebspunkt ergibt sich durch den Stromzeiger bzw. den Strom $I_{dq}$ und den Spannungszeiger, der die Spannung $U_{dq}$ und den verketteten Fluss $\Psi_{dq}$ anzeigt. Der Betriebspunkt ist das gemeinsame Ende der Zeiger für den Strom $I_{dq}$ und den verketteten Fluss $\Psi_{dq}$.

Im Blockbetrieb kann der Betriebspunkt B nur auf dem sog. Spannungskreis, hier mit 410 bezeichnet, verschoben werden. Der Spannungskreis 410 stellt dabei eine maximal mögliche Spannung (bzw. nach Umrechnung den maximal möglichen verketteten Fluss), die im Blockbetrieb dauerhaft verwendet wird, dar. Der Mittelpunkt 411 des Spannungskreises 410 (oder der Spannungsellipse) wird durch den Erregerfluss in der Erregerwicklung und die d-Induktivität bestimmt und kann somit durch die Variation des Erregerstroms verschoben werden, wenn es sich im um eine fremderregte Maschine handelt.

Bei Entlanglaufen des Spannungskreises 410 (bzw. der Spannungsellipse) durch den Stromzeiger für $I_{dq}$ wird nun zunächst der q-Wert des Phasenstroms und damit das Drehmoment höher. Bei Überschreiten des sog. Kipp-Winkels (bzw. Kipp-Punktes oder Kipp-Momentes) nimmt zwar der Betrag von $I_{dq}$ zu, jedoch nehmen der q-Wert und somit auch das Drehmoment ab. Dies ist der Effizienz abträglich und gilt es somit zu vermeiden. Der Kipp-Winkel ist in Figur 5a, also für den motorischen Betrieb, mit 420 bezeichnet, in Figur 5b, also für den generatorischen Betrieb, mit 421.

Der Phasenwinkel (und damit der Vorkommutierungswinkel) a, wie in den Figuren 5a und 5b zu sehen und wie zuvor erläutert, kann sich theoretisch für den motorischen Betrieb zwischen 90° und 180° und für den generatorischen Betrieb zwischen 0° und 90° bewegen.

In der Realität befindet sich die Begrenzung für den Phasenwinkel allerdings nicht bei den angebenden Grenzen, sondern weicht aufgrund des Reluktanzmoments, des Statorwiderstands und Verlusten ab. Dies lässt sich beispielsweise durch Messungen bestätigen.

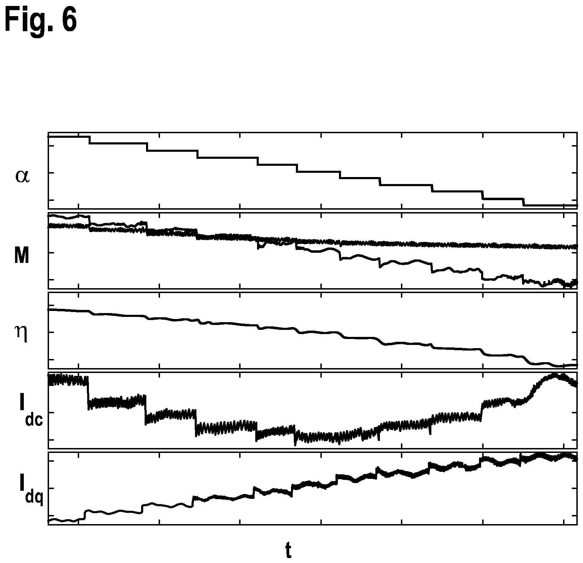

In Figur 6 ist eine Messung für den generatorischen Betrieb gezeigt. Dabei sind der Phasenwinkel bzw. Vorkommutierungswinkel a, das Drehmoment M (zwei verschiedene Messarten, einmal physikalisch gemessen und einmal eine interne Schätzgröße), der Wirkungsgrad η, der erzeugte DC-Strom $I_{dc}$ sowie der Phasenstrom $I_{dq}$ jeweils über der Zeit t dargestellt.

Für die Messung wurden alle ansteuerrelevanten Größen konstant gelassen und nur der Vorkommutierungswinkel $\alpha$ wurde von 0,45 rad auf 0 rad geändert. Ab der eingezeichneten, senkrechten Linie wird das generatorische Drehmoment größer, der generatorisch erzeugte DC-Strom $I_{dc}$ wird kleiner, der Phasenstrom $I_{dq}$ wird größer. Dies bedeutet, der Kipp-Winkel wurde überschritten, der Wirkungsgrad sinkt.

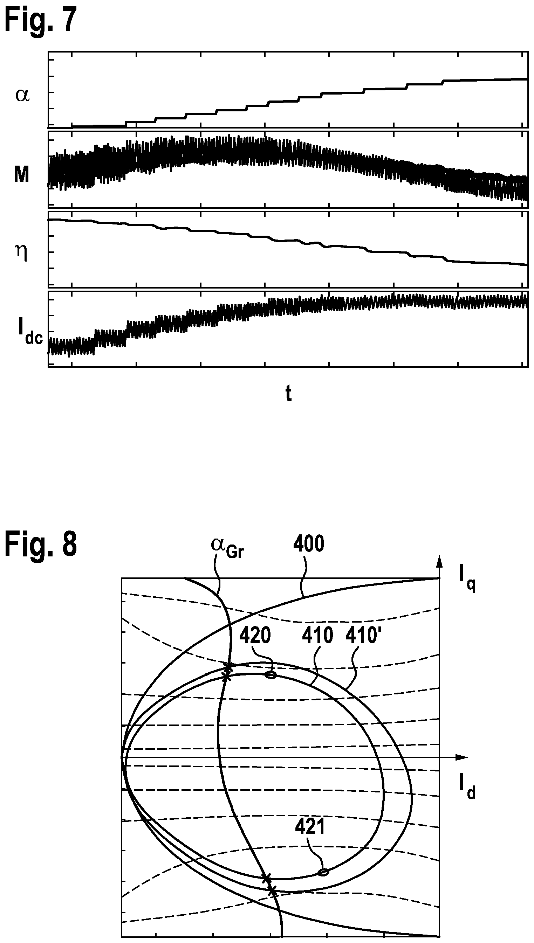

In Figur 7 ist ein eine weitere Messung für den motorischen Betrieb gezeigt. Im Vergleich zu Figur 6 ist hier jedoch der Phasenstrom nicht gezeigt. Der Vorkommutierungswinkel $\alpha$ wurde hier von 2,55 rad an erhöht. In diesem Fall sinkt das gestellte Drehmoment ab der eingezeichneten, senkrechten Linie trotz einer Erhöhung des Phasenwinkels. Der Wirkungsgrad wird kleiner, der benötigte DC-Strom wird größer. Der Kipp-Winkel und damit die Stabilitätsgrenze werden also überschritten.

Das Überschreiten des Kipp-Winkels kann auch durch eine analytische Berechnung des Kippwinkels bestätigt werden, wie in Figur 8 gezeigt. Hier sind erneut - ähnlich zu Figuren 5a und 5b - $I_d$ und $I_q$ gegeneinander aufgetragen. Neben dem Spannungskreis 410 (bzw. Spannungsellipse) wie in Figuren 5a und 5b ist ein weiterer Spannungskreis 410' für eine andere Spannung eingezeichnet. Zudem ist ein Stromkreis 400 gezeigt, der den maximal möglichen Phasenstrom angibt. Linien konstanten Drehmoments sind gestrichelt eingezeichnet.

Mit $\alpha_{Gr}$ ist nun eine Linie eingezeichnet, die den maximal einstellbaren Phasenwinkel bzw. Vorkommutierungswinkel, d.h. 0° bzw. 180° angibt, wie in Bezug auf die Figuren 5a und 5b bereits erläutert. Weiterhin sind auch wieder die KippWinkel 420 und 421 zu sehen.

Gemäß vorliegendem Verfahren können diese Kipp-Winkel nun in Echtzeit bzw. online bestimmt werden und somit im generatorischen Betrieb einen größeren DC-Strom bei kleinerem bremsenden Moment und kleineren Phasenströmen erreichen. Im motorischen Betrieb wird das Maximalmoment erhöht und die Phasenströme im Maximalpunkt werden verringert. Weiterhin erhöht dieses Verfahren die Dynamik eines Reglers bei der Block-Ansteuerung, da der Stellbereich verkleinert wird und die Instabilität hinter dem Kipp-Winkel vermieden wird.

Im Folgenden sind die Phasenströme und Phasenspannungen auch mit Kleinbuchstaben bezeichnet.

Der Kipp-Winkel kann berechnet werden, indem man den Punkt mit dem betragsmäßig höchsten DC-Strom auf der Spannungsellipse gemäß Figur 8 sucht. Rechnerisch ergibt sich der Verlauf für den DC-Strom:

$$I_{dc} = \frac{5}{2 \cdot U_{dc}} \mathrm{Re}\{u_{dq} i_{dq}^*\} = \frac{5}{2 \cdot U_{dc}} (u_d i_d + u_q i_q)$$

Die Spannungsellipse wird durch die folgenden Gleichungen beschrieben.

$$u_d = R_s i_d - \omega_{el} L_q i_q - \omega_{el} \psi_\sigma$$

$$u_q = R_s i_q + \omega_{el}(L_d i_d + \psi_{Rotor})$$

$$u_{dq} = \sqrt{u_d^2 + u_q^2} \overset{!}{\leq} u_{dq,Limit} \; .$$

Dabei geben Rs den Statorwiderstand, $\omega_{el}$ die elektrische Kreisfrequenz, $\Psi_{Rotor}$ die Erregerflussverkettung und $\Psi_\sigma$ den Streufluss resultierend aus Rotormagneten zwischen den Klauen der Klauenpolmaschine an.

Die letzte Gleichung kann nach $u_d$ umgestellt und für einen Rechenschritt durch eine Taylorapproximation erster Ordnung angenähert werden:

$$u_d = \underbrace{\mp \sqrt{u_{dq,Limit}^2 - u_{q,last}^2}}_{T_{1u}} - \underbrace{\frac{\mp u_{q,last}}{\sqrt{u_{dq,Limit}^2 - u_{q,last}^2}}}_{T_{1u}'} (u_q - u_{q,last})$$

Umstellen der Gleichungen für die Spannungsellipse nach $i_d$ und $i_q$ liefert dann:

$$i_q = \frac{-\omega_{el} \cdot L_d \cdot u_d - \omega_{el}^2 \psi_\sigma L_d + u_q R_s - R_s \cdot \omega_{el} \cdot \psi_{Rotor}}{R_s^2 + \omega^2 \cdot L_d \cdot L_q}$$

$$i_d = \frac{u_q \omega_{el} L_q + R_s \cdot u_d + R_s \omega_{el} \psi_\sigma - \omega_{el}^2 \cdot L_q \cdot \psi_{Rotor}}{R_s^2 + \omega_{el}^2 \cdot L_d \cdot L_q}$$

Einsetzen in die Gleichung für den DC-Strom ergibt:

$$I_{dc} = \frac{5}{2U_{dc}(R_s^2 + \omega_{el}^2 \cdot L_d \cdot L_q)} (R_s u_{dq}^2 + u_d(-\omega_{el}^2 L_q \psi_R + \omega_{el} \psi_\sigma R_s)$$

$$+ u_d u_q \omega_{el}(L_q - L_d) + u_q(-R_s \omega_{el} \psi_R - \omega_{el}^2 L_d \psi_\sigma)$$

Durch Ableiten und gleich Null setzen lässt sich schließlich eine Gleichung für $u_q$ im Kipp-Winkel herleiten:

$$\frac{dI_{dc}}{du_q} = 0$$

$$u_{q,kipp} = \frac{-\omega_{el}^2 L_q \psi_R + \omega_{el}\psi_\sigma R_s + T_{1u}'(R_s\omega_{el}\psi_R - \omega_{el}^2 L_d\psi_\sigma)}{4\omega_{el}(L_q - L_d)}$$

$$\pm \sqrt{\left(\frac{-\omega_{el}^2 L_q\psi_R + \omega_{el}\psi_\sigma R_s + T_{1u}'(R_s\omega_{el}\psi_R - \omega_{el}^2 L_d\psi_\sigma)}{4\omega_{el}(L_q - L_d)}\right)^2 + \frac{T_{1u}(R_s\omega_{el}\psi_R + \omega_{el}\psi_\sigma L_d) - T_{1u}'u_{q(k-1)}(R_s\omega_{el}\psi_R - \omega_{el}^2 L_d\psi_\sigma)}{2\omega_{el}(L_q - L_d)} - \frac{u_{dq,Limit}^2}{2}}$$

$$u_{d,kipp} = -\sqrt{u_{dq,Limit}^2 - u_{q,kipp}^2}, u_q = u_{q,kipp}$$

Der Kippwinkel lässt sich schließlich über a= arctan2($u_{q,kipp}$,$u_{d.kipp}$) berechnen. Die Berechnung beinhaltet sowohl die Abhängigkeit vom Statorwiderstand als auch von Sättigungseigenschaften der Parameter der elektrischen Maschine. Die Sättigungseigenschaften werden durch die Abhängigkeit der Parameter von den Phasenströmen $I_d$, $I_q$ und dem Erregerstrom $I_{ex}$ abgebildet.

$$L_d = f(i_d, i_q, i_{exct}), L_q = f(i_d, i_q, i_{exct}), \psi_{Rotor} = f(i_{ex}, i_q, i_d)$$

Sie lässt sich durch Messungen identifizieren und über ein Polynom abbilden.

Die Berechnung muss iterativ erfolgen, damit immer auf den aktuellen, im Betrieb geltenden Parametern aufgesetzt wird.

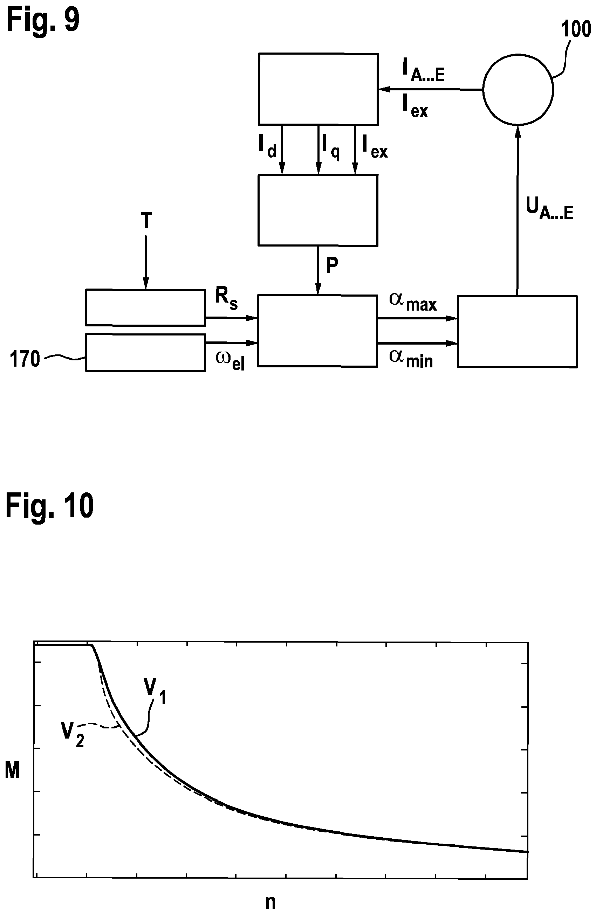

In Figur 9 ist nun ein Ablauf eines erfindungsgemäßen Verfahrens in einer bevorzugten Ausführungsform dargestellt. Die Phasenströme, hier mit $I_{A...E}$ bezeichnet, sowie ggf. der Erregerstrom $I_{ex}$ werden gemessen, aus den gemessenen Phasenströmen werden die Parameter P im aktuellen Betriebspunkt bestimmt. Die Parameter können die bereits erwähnten Parameter d-Induktivität $L_d$, q-Induktivität $L_q$, die Erregerflussverkettung $\Psi_{Rotor}$ und den Streufluss $\Psi_\sigma$ umfassen.

Zusätzlich wird der aktuelle Statorwiderstand Rs in Abhängigkeit von der Temperatur T ausgerechnet. Zusammen mit der elektrischen Kreisfrequenz $\omega_{el}$ (die beispielsweise mittels eines Sensors 170 erfasst wird) werden schließlich der maximale und der minimale Vorkommutierungswinkel $\alpha_{max}$ und $\alpha_{min}$, also für den motorischen bzw. generatorischen Betrieb (oben auch mit 420 und 421 bezeichnet), berechnet, welche dann in die Regelung eingehen. Dort können dann der Vorkommutierungswinkel ermittelt und die Phasenspannung $U_{dq}$ berechnet werden, welche wiederum in die Phasenspannungen $U_{A...E}$ für die Wicklungen umgerechnet wird.

In Figur 10 ist nun ein Vergleich eines Drehmoments M, das über der Drehzahl n der elektrischen Maschine aufgetragen ist, für einen Fall ohne das beschriebene Verfahren (Verlauf $V_2$) und einen Fall mit dem beschriebenen Verfahren ($V_1$) gezeigt. Dabei ist zu sehen, dass mit dem vorliegenden Verfahren ein höheres Drehmoment möglich ist. Ebenso werden das Ist-Drehmoment bzw. das geschätzte Drehmoment größer, die Phasenströme werden kleiner, und der Sollwert stellt sich schneller ein.

**Patentansprüche**

1. Verfahren zum Betreiben einer elektrischen Maschine (100) mit einer Block-Ansteuerung, **dadurch gekennzeichnet, dass** im Rahmen einer Regelung eines Drehmoments (M) der elektrischen Maschine ein Vorkommutierungswinkel (a) derart eingestellt wird, dass dieser einen Kipp-Winkel (420, 421) für einen motorischen Betrieb und/oder einen generatorischen Betrieb nicht überschreitet,
wobei der Kipp-Winkel (420, 421) für den motorischen Betrieb und/oder den generatorischen Betrieb während des Betriebs iterativ ermittelt wird.

2. Verfahren nach Anspruch 1, wobei der Kipp-Winkel (420, 421) für den motorischen Betrieb und/oder den generatorischen Betrieb während des Betriebs iterativ unter Verwendung einer aktuell maximal stellbaren Spannung ($U_{dc}$), einer aktuellen Kreisfrequenz ($\omega_{el}$) der elektrischen Maschine, von Parametern (P) der elektrischen Maschine und eines maximal zulässigen Phasenstromes ermittelt wird.

3. Verfahren nach Anspruch 2, wobei als Parameter (P) der elektrischen Maschine wenigstens ein verketteter Fluss und/oder wenigstens eine Induktivität der elektrischen Maschine (100) verwendet werden.

4. Verfahren nach Anspruch 2 oder 3, wobei die Parameter (P) der elektrischen Maschine basierend auf einem q-Wert eines Phasenstroms ($I_q$) und/oder einem d-Wert eines Phasenstroms ($I_d$) und/oder einem Erregerstrom ($I_{ex}$) ermittelt werden.

5. Verfahren nach Anspruch 4, wobei der q-Wert des Phasenstroms ($I_q$) und/oder der d-Wert des Phasenstroms ($I_d$) basierend auf gemessenen Phasenströmen ($I_A$, $I_B$, $I_C$, $I_D$, $I_E$) der elektrischen Maschine ermittelt werden.

6. Verfahren nach einem der vorstehenden Ansprüche, wobei der Kipp-Winkel (420, 421) für den motorischen Betrieb und/oder den generatorischen Betrieb während des Betriebs iterativ unter Verwendung einer aktuellen Temperatur (T) der elektrischen Maschine ermittelt wird.

7. Verfahren nach einem der vorstehenden Ansprüche, wobei der Vorkommutierungswinkel (a) eingestellt wird, indem er im Rahmen einer unterlagerten Regelung eingeregelt wird.

8. Anordnung aus einer elektrischen Maschine mit Mitteln zum Messen von Phasenströmen ($I_A$, $I_B$, $I_C$, $I_D$, $I_E$) und einer Recheneinheit (140), die dazu eingerichtet ist, ein Verfahren nach einem der vorstehenden Ansprüche durchzuführen.

9. Computerprogramm, das eine Recheneinheit (140) einer Anordnung nach Anspruch 8 dazu veranlasst, ein Verfahren nach einem der Ansprüche 1 bis 7 durchzuführen, wenn es auf der Recheneinheit (140) ausgeführt wird.

10. Maschinenlesbares Speichermedium mit einem darauf gespeicherten Computerprogramm nach Anspruch 9.


**Claims**

1. Method for operating an electrical machine (100) with a block control, **characterized in that**, as part of a control of a torque (M) of the electrical machine, a precommutation angle (a) is set in such a way that it does not exceed a tilt angle (420, 421) for motor operation and/or generator operation,
wherein the tilt angle (420, 421) for motor operation and/or generator operation is determined iteratively during operation.

2. Method according to claim 1, wherein the tilt angle (420, 421) for the motor operation and/or the generator operation is determined iteratively during operation using a current maximum settable voltage ($U_{dc}$), a current angular frequency ($\omega_{el}$) of the electric machine, parameters (P) of the electric machine and a maximum permissible phase current.

3. Method according to claim 2, wherein at least one chained flux and/or at least one inductance of the electric machine (100) are used as parameters (P) of the electric machine.

4. Method according to claim 2 or 3, wherein the parameters (P) of the electric machine are determined based on a q-value of a phase current ($I_q$) and/or a d-value of a phase current ($I_d$) and/or an excitation current ($I_{ex}$).

5. Method according to claim 4, wherein the q-value of the phase current ($I_q$) and/or the d-value of the phase current ($I_d$) are determined based on measured phase currents ($I_A$, $I_B$, $I_C$, $I$, $I_{DE}$) of the electrical machine.

6. Method according to any one of the preceding claims, wherein the tilt angle (420, 421) for motor operation and/or generator operation is determined iteratively during operation using a current temperature (T) of the electric machine.

7. Method according to any of the preceding claims, wherein the precommutation angle ($\alpha$) is set by adjusting it within the scope of a subordinate control.

8. Arrangement comprising an electrical machine with means for measuring phase currents ($I_A$, $I_B$, $I_C$, $I$, $I_{DE}$) and a computing unit (140) which is set up to carry out a method according to any one of the preceding claims.

9. Computer program that causes a computing unit (140) of an arrangement according to claim 8 to perform a method

**EP 3 695 508 B1**

according to any one of claims 1 to 7 when executed on the computing unit (140).

**10.** Machine-readable storage medium having stored thereon a computer program according to claim 9.

**Revendications**

**1.** Procédé pour faire fonctionner une machine électrique (100) avec une sélection de blocs, **caractérisé en ce que** dans le cadre d'une régulation d'un couple (M) de la machine électrique, un angle de pré-commutation ($\alpha$) est réglé de sorte que celui-ci ne franchit pas un angle de décrochage (420, 421) pour un mode moteur et/ou un mode générateur, dans lequel l'angle de décrochage (420, 421) pour le mode moteur et/ou le mode générateur est déterminé de manière itérative pendant le fonctionnement.

**2.** Procédé selon la revendication 1, dans lequel l'angle de décrochage (420, 421) pour le mode moteur et/ou le mode générateur pendant le fonctionnement est déterminé de manière itérative en utilisant une tension réglable maximale actuelle ($U_{dc}$), une fréquence angulaire actuelle ($\omega_{el}$) de la machine électrique, à partir de paramètres (P) de la machine électrique et d'un courant de phase admissible maximal.

**3.** Procédé selon la revendication 2, dans lequel au moins un flux enchaîné et/ou au moins une inductance de la machine électrique (100) sont utilisés comme paramètres (P) de la machine électrique.

**4.** Procédé selon la revendication 2 ou 3, dans lequel les paramètres (P) de la machine électrique sont déterminés sur la base d'une valeur q d'un courant de phase ($I_q$) et/ou d'une valeur d d'un courant de phase ($I_d$) et/ou d'un courant d'excitation ($I_{ex}$).

**5.** Procédé selon la revendication 4, dans lequel la valeur q du courant de phase ($I_q$) et/ou la valeur d du courant de phase ($I_d$) sont déterminées sur la base de courants de phase mesurés ($I_A$, $I_B$, $I_C$, $I_D$, $I_E$) de la machine électrique.

**6.** Procédé selon l'une des revendications précédentes, dans lequel l'angle de décrochage (420, 421) pour le mode moteur et/ou le mode générateur pendant le fonctionnement est déterminé de manière itérative en utilisant une température actuelle (T) de la machine électrique.

**7.** Procédé selon l'une des revendications précédentes, dans lequel l'angle de pré-commutation ($\alpha$) est réglé en le régulant dans le cadre d'une régulation en cascade.

**8.** Système constitué d'une machine électrique comportant des moyens pour mesurer des courants de phase ($I_A$, $I_B$, $I_C$, $I_D$, $I_E$) et une unité de calcul (140) configurée pour mettre en œuvre un procédé selon l'une des revendications précédentes.

**9.** Programme informatique qui permet à une unité de calcul (140) d'un système selon la revendication 8 de mettre en œuvre un procédé selon l'une des revendications 1 à 7, lorsqu'il est exécuté sur l'unité de calcul (140).

**10.** Support de mémoire lisible par machine sur lequel est stocké un programme informatique selon la revendication 9.

9

Fig. 1

EP 3 695 508 B1

# Fig. 2

# Fig. 3

# Fig. 4

Fig. 5(a)

Fig. 5(b)

Fig. 6

## Fig. 7

## Fig. 8

# Fig. 9

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005045401 A1